# EUROPEAN PATENT APPLICATION

(11) **EP 3 779 971 A1**
(43) Date of publication of application: **17.02.2021**
(21) Application number: 18916465.0
(22) Date of filing: 27.04.2018
(51) Int. Cl.: G10L 15/26, G10L 15/18, G06F 17/28, G10L 13/08

(54) **METHOD FOR RECORDING AND OUTPUTTING CONVERSATION BETWEEN MULTIPLE PARTIES USING VOICE RECOGNITION TECHNOLOGY, AND DEVICE THEREFOR**

(71) Applicant: Llsollu Co., Ltd., Seoul 06775 (KR)
(72) Inventor: KIM, Suntae, Seoul 06953 (KR); HWANG, Myeongjin, Seoul 06307 (KR); PARK, Raejin, Incheon 21328 (KR); JI, Changjin, Seoul 06994 (KR)
(74) Representative: Wittmer, Maximilian
(86) International application number: PCT/KR2018/004973
(87) International publication number: WO 2019/208860

(57) **Abstract**

The voice recognition and translation method by a voice recognition system for multiple parties, according to one embodiment of the present invention, comprises the steps of: receiving a voice input; recognizing a first language which is the language of the voice; recognizing the text of the voice by means of a basic sound model on the basis of the first language; translating the recognized voice into an output language, if the first language is not the output language that has been preset as the output language; and storing and outputting the result in the output language.

## Description

### Field of Invention

The present invention relates to a method for generating a multiparty conversation and a conversation record using an automatic speech recognition system, and an apparatus for supporting the same.

### Background of Invention

A multiparty conversation system is a system that enables real-time conversation between multiple parties through a computer and a network. The multiparty conversation system has mostly been used for the purpose of communication between individuals, but may also be used for business purposes such as meetings, and utilize communication methods including text, voice, and video.

In case of the conversation for purpose of business such as meetings or trials, the contents of the conversation may be summarized to prepare a conversation record usually by manual labor. In recent years, there have been attempts to automate such manual labor, however, a problem of inferior work reliability/accuracy to manual work is encountered. In fact, in order to review an automatically created conversation record based on the recorded conversation contents, time and effort are consumed. In particular, there is a problem of requiring a lot of time and effort to find a location where a specific conversation is recorded in the recorded conversation contents.

Further, foreigners participating in multiparty conversation are currently increasing. In this regard, if all attendees are unable to communicate with each other, an interpreter is needed, which will cause increase in meeting time and costs.

Automatic speech recognition technology converts a user's voice into text. This technique has recently experienced remarkable improvement in speech recognition rate. However, development of technology for recognizing an accurate time point of utterance when overlapping utterance occurs is still insufficient. In general, a speech recognition device serves to convert voice in a specific time slot into text. That is, the speech recognition device performs speech recognition under the assumption that only one person speaks at the present time. Therefore, when two or more user's utterances overlap (that is, utterances generated by several users at the same time), it is impossible for the currently used speech recognition device to accurately convert all of the overlapping utterances into text. Accordingly, in order to accurately recognize a user's voice by the speech recognition device, appropriate functions to separate utterances by user/talker are required.

Further, there is a problem of non-registered words as another factor of inferior speech recognition accuracy. The speech recognition device does not recognize a word not registered in the dictionary but may suggest another word having similar pronunciation but different meanings. In order to solve this problem, all possible vocabularies may be registered in the speech recognition device. However, in this case, as the acoustic model is enlarged, a problem of decrease in processing speed of the speech recognition device may occur. Therefore, in order to assure performance of the speech recognition device, appropriate functions of overcoming/treating misrecognition due to unregistered words are also required.

### Summary of Invention

### Technical Problem to be Solved

An object of the present invention is to propose a speech recognition method with high accuracy for translating/recording/outputting a conversation between multiple parties ("multi-party conversation") and a device for the same.

Technical problems to be achieved in the present invention are not limited to the above-mentioned technical objects, and other technical problems not mentioned above will be clearly understood by those skilled in the art from the following description.

### Technical Solution

According to an aspect of the present invention, there is provided a speech recognition and translation method by a multiparty speech recognition system, which includes: inputting a voice; recognizing a first language that is a language of the voice; recognizing a text of the voice through a basic acoustic model based on the first language; if the first language is not an output language preset as the output language, translating the recognized speech into the output language; and storing and outputting a result configured in the output language.

Further, speech recognition may include converting the voice into text in the first language through the basic acoustic model.

Further, the translation into the output language may include translating the text in the first language into another text in the output language.

Further, the storage and outputting of the result configured in the output language may include outputting the result translated into the output language as text and/or sound.

Further, the outputting of the result configured in the output language as the above sound may include outputting the output language in the same voice as the input voice.

Further, when there is a plurality of voice output units for outputting the output language as the sound in the same area, the outputting of the result configured in the output language as the sound may include: selecting at least one among the plural sound output units to output the sound; and outputting the result as the sound only through the selected at least one sound output unit.

Further, the selection of the at least one voice output unit may include selecting the voice output units as many as a predetermined number among the plural voice output units in the nearest order to the actual or virtual position of a talker.

Further, when the voice is input several times, the outputting of a result configured in the output language into the text may include discriminating the text by identifiers (ID) in order to identify an input source of the voice, and then, outputting the voice in chronological order in which the voice is input.

Further, the identifiers may be differently allocated to respective voice input channels in which the voice is input.

Further, the identifier may be selected within the result configured in the output language.

Further, the outputting of the result configured in the output language as the text may include: outputting the result as texts to which different formats are applied according to importance of words, vocabularies and/or sentences in the result configured in the output language.

Further, the outputting of the result configured in the output language as the text may further include: outputting the words, vocabularies and/or sentences, which have sound recognition reliability less than a predetermined level, among the result configured in the output language, as texts to which the preset format is applied.

Further, the speech recognition and translation method may include: inputting corrected text in regard to the text to which the preset format is applied; and replacing the text to which the present format is applied with the corrected text.

Further, the storage of the result configured in the output language may further include storing the identifier and the result in the output language in association with each other.

The inputting of the voice may correspond to a step of distinguishing a talker for each voice input unit to input a voice and inputting the voice of each talker through an independent channel.

Further, when outputting the pre-stored result as sound, the inputting of the sound may be stopped while outputting the pre-stored result.

Further, the speech recognition and translation method may further include: inputting selection and release of keywords and/or key sentences from the output result.

Further, the speech recognition and translation method may further include: summarizing the result configured in the output language through a preset algorithm based on the selected keywords and/or key sentences.

In addition, according to another aspect of the present invention, there is provided a speech recognition system, which includes: a voice input unit to input voice; a processor that recognizes a first language as a language of the voice, recognizes the voice through a basic acoustic model based on the first language and, if the first language is not an output language preset as the output language, translates the recognized speech into the output language; a memory to store a result translated into the output language; and an output unit to output the translated result in the output language.

### Effect of Invention

According to an embodiment of the present invention, speech recognition is applied to a multiparty conversation system so as to convert all of voice and video conversations into texts that are easy to manage/save/search.

Further, according to an embodiment of the present invention, since utterances are classified and recorded in terms of talkers and the names thereof are automatically assigned/modified for each talker, the conversation of each talker can be confirmed or identified.

Further, according to an embodiment of the present invention, the user can confirm the results recognized and translated in real time.

Further, according to an embodiment of the present invention, the user can hear the text of the conversation record with the voice of the talker.

Further, according to an embodiment of the present invention, the speech recognition device may select an important utterance at any time even during conversation, and may reflect the same in the conversation record.

Further, according to an embodiment of the present invention, the speech recognition device may afford a correction function for misrecognized words and thus treat such misrecognition, thereby correcting a result from the speech recognition device.

Effects obtainable in the present invention are not limited to the above-mentioned effects, and other effects not mentioned herein will be clearly understood from the following description by those skilled in the art to which the present invention pertains.

### Brief Description of Drawings

FIG. 1 is a block diagram of a speech recognition device according to an embodiment of the present invention.
FIG. 2 illustrates a multiparty conversation system according to an embodiment of the invention.
FIG. 3 illustrates a speech recognition system including a plurality of speech recognition devices according to an embodiment of the present invention.
FIG. 4 illustrates a keyword selection method according to an embodiment of the present invention.
FIG. 5 is a flowchart illustrating a speech recognition and translation method according to an embodiment of the present invention.

Detailed Description of Preferred Embodiments of Invention

In order to facilitate understanding of the present invention, the accompanying drawings included as a part of the detailed description will provide embodiments of the present invention and specify technical features of the present invention along with the detailed description.

Hereinafter, preferred embodiments of the present invention will be described in detail with reference to the accompanying drawings. A detailed description given below as well as the accompanying drawings are intended to explain exemplary embodiments of the present invention but are not proposed to represent the only embodiments in which the present invention can be implemented. The following detailed description includes specific details to facilitate a thorough understanding of the present invention. However, those skilled in art will obviously appreciate that the present invention may be practiced even without such specific details as described above.

In some instances, in order to avoid obscuring the concepts of the preset invention, well-known structures and devices may be omitted or shown in block diagram form including key functions of respective structures and devices.

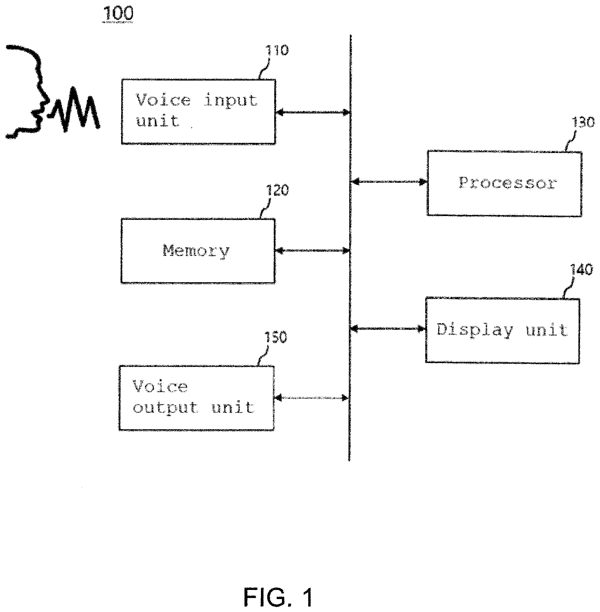

FIG. 1 is a block diagram of a speech recognition device according to an embodiment of the present invention.

Referring to FIG. 1, the speech recognition device 100 may include a voice input unit 110 to input a user's voice, a memory 120 to store various types of data in relation to the recognized speech, a processor 130 to process the input user's voice, a display unit 140 to display image/video and/or an audio output unit 150 to output a voice. Herein, the display unit 140 and the voice output unit 150 may be commonly referred to as an "output unit".

The voice input unit 110 may include a microphone and, when a user's uttered voice is input, may convert the uttered voice into an electrical signal and output the same to the processor 130.

The processor 130 may apply a speech recognition algorithm or a speech recognition engine to the received signal from the voice input unit 110, thereby acquiring voice data of the user.

At this time, the signal input to the processor 130 may be converted into a more useful form for speech recognition. The processor 130 may convert the input signal from an analog form into a digital form, and may detect start and end points of the speech and further detect the actual speech section/data included in voice data. This is called end point detection (EPD).

Further, the processor 130 may extract a feature vector of the signal by applying specific vector extraction skills such as Cepstrum, Linear Predictive Coefficient (LPC), Mel Frequency Cepstral Coefficient (MFCCC) or Filter Bank Energy, etc. within the detected section.

The processor 130 may store information on the end point of the voice data as well as the feature vector by the memory 120 in which the data is stored.

The memory 120 may include at least one storage medium among a flash memory, a hard disk, a memory card, a read-only memory (ROM), a random access memory (RAM), a memory card, an electrically erasable programmable read-only memory (EEPROM), a programmable read-only memory (PROM), a magnetic memory, a magnetic disk and an optical disc.

Further, the processor 130 may obtain a recognition result by comparing the extracted feature vector with a trained reference pattern. To this end, an acoustic model for modeling and comparing signal characteristics of speech and a language model for modeling a linguistic sequence relation such as words or syllables corresponding to the recognized vocabulary may be used.

The acoustic model may be further divided into a direct comparison method that sets a specific vector model as a recognition object and compares the same with a feature vector of speech data, and a statistical method that statistically processes and uses a feature vector of the recognition object.

A language model for modeling a linguistic sequence relation such as words or syllables may apply a sequence relation between language constitutional units to the units obtained by speech recognition, so as to reduce acoustic ambiguity as well as failure in recognition ("misrecognition"). The language model may include a statistical language model and a model based on finite state automata (FSA), wherein the statistical language model uses a chain probability of words such as Unigram, Bigram, Trigram, etc.

The processor 130 may use any of the above-mentioned modes in recognizing the voice. For example, an acoustic model with a hidden Markov model may be used, or an N-best search method with a combination of the acoustic model and the language model may be used. The N-best search method may improve recognition performance by selecting N recognition result candidates using both of the acoustic model and the language model and then re-evaluating the ranks of these candidates.

The processor 130 may calculate a confidence score (which may be abbreviated as "confidence") in order to secure the reliability of the recognition result.

With regard to a speech recognition result, the confidence score represents reliability of the result. Specifically, with regard to phonemes or words as the recognized result, the confidence score may be defined as a relative value of probability indicating that the speech in the result has been uttered from other phonemes or words. Therefore, the confidence score may be expressed as a value in the range of 0 to 1, or in the range of 0 to 100. If the confidence score is larger than a predetermined threshold, the recognition result is acceptable. On the other hand, if the confidence score is relatively small, the recognition result may be rejected.

In addition, the confidence score may be acquired according to a variety of conventional confidence score acquisition algorithms.

Further, the processor 130 may translate the recognized user's voice into a preset language and convert the same into text, followed by displaying the converted text on a display unit 140. Further, the processor 130 may output the translated language through the voice output unit 150 with the input voice of the user. For this purpose, the processor may store the user's voice in the memory 120 in advance (or during speech recognition).

The display unit 140 (e.g., a liquid crystal display (LCD), a light-emitting diode (LED), an organic LED (OLED), etc.) may output various images/videos under control of the processor 130.

The voice output unit 150 (e.g., a speaker, an earphone, etc.) may output various voices under control of the processor 130.

The processor 130 may be implemented within a computer-readable recording medium using software, hardware or a combination thereof. Hardware implementation may be achieved by at least one of electrical units such as Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, microcontrollers, microprocessors, or the like.

Software implementation may be achieved by means of a separate software module to perform at least one function or operation, wherein software code can be implemented by software applications written in a suitable programming language.

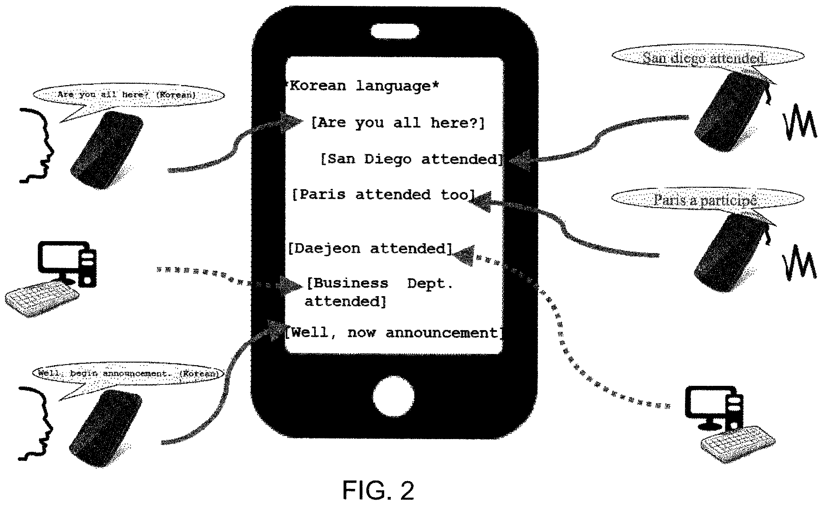

The processor 130 may implement the functions, processes, and/or methods proposed in FIGS. 2 to 5 described later. Hereinafter, for convenience of explanation, the processor 130 will be described as being identical to the speech recognition device 100. Further, the speech recognition device 100 may be basically implemented as a single device, however, may also be implemented as a combination/assembly of plural devices. In the latter case, the plurality of speech recognition devices constitute a single speech recognition system, which is controlled by one master speech recognition device selected from the plurality of speech recognition devices. Hereinafter, for convenience of description, the voice recognition system and the master speech recognition device will be described as being identical to each other.

The present invention relates to a multiparty conversation recognition/translation/output/recording method using speech recognition technology and automatic translation technology. According to the present invention, availability of the conversation system using image, voice or text may be improved while more effectively creating/outputting/searching a conversation record.

FIG. 2 illustrates a multiparty conversation system according to one embodiment of the invention.

Referring to FIG. 2, the speech recognition device 100 may input a voice uttered for each talker and recognize the same. If a language set in the speech recognition device 100 as the language to be output/recorded is different from the language of the recognized voice, the speech recognition device 140 may automatically translate the recognized language into the set language. In case of the embodiment of the present figure, the set language is 'Korean'. Accordingly, the speech recognition device 100 may translate all of the recognized speech languages (e.g., English and French) into 'Korean', and output the translated results as text and speech.

In more detail, the speech recognition device 100 may output/display the speech recognition/translation result text on the display 140 in the order of time. Further/alternatively, the speech recognition device 100 may output the output text through the voice output unit 150 as the voice of the talker who uttered each text. To this end, the speech recognition device 100 may be input with the voice of each talker in advance and store the same in the memory 120. In addition, the speech recognition device 100 may output the output text in a preset language. That is, in the present embodiment, the speech recognition device 100 may output a speech in 'Korean' from the output text.

In other words, the voices of all the talkers may be converted and translated into texts in a language desired by the user of the speech recognition device 100 and then output to the display unit 140. The output texts are converted into voices of the respective talkers and output through the voice output unit.

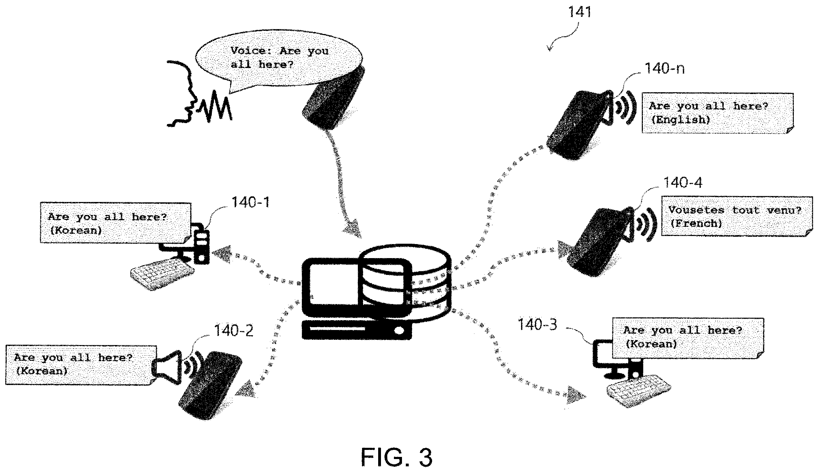

FIG. 3 illustrates a speech recognition system including a plurality of speech recognition devices according to an embodiment of the present invention.

When the plurality of speech recognition devices 140-1 to 140-n exists in the same space, the speech recognition system 141 selects a specific speech recognition device (or a voice output unit of the specific speech recognition device), and the voice may be controlled to be output only through the selected speech recognition device. The reason being that, when the same voice is output through a plurality of speech recognition devices at a slight time difference, the users may have difficulty in understanding the same. Therefore, when the speech recognition system 141 determines that the plurality of speech recognition devices 140-1 to 140-n is present in the same space, the speech recognition system 141 may control the voice to be output only from the designated/selected speech recognition device.

The speech recognition system 141 may determine whether a plurality of speech devices 140-1 to 140-n exists in the same space according to various embodiments, such as: location information acquired by GPS separately provided to each of the speech recognition devices 140-1 to 140-n; whether the devices commonly belong to a specific communication medium having a narrow propagation range; similarity of microphone inflow sounds; whether the devices randomly transmit light waves, radio waves, sound waves, etc. having a narrow propagation range so as to communicate with each other, and so on.

The speech recognition system 141 may select a specific speech recognition device for outputting voice manually, randomly or according to a predetermined rule. For example, with reference to or by reflecting statuses/roles of conversation participants (detailed information on the same may be input separately from each participant. In this case, the conversation presenter/moderator's speech recognition device may be selected) and/or features of the voice output unit included in each speech recognition device (for example, a speech recognition device provided with the voice output unit having best volume and/or sound quality may be selected), the corresponding speech recognition device that outputs a voice may be selected.

Further/alternatively, the voice recognition system 141 may perform voice output synchronization between the plural speech recognition devices without selecting a specific speech recognition device to output a voice. The reason being that the user, that is, the listener does not feel confused even when the plural speech recognition devices output different voices at the same time, if the devices are under the same voice output synchrony. Therefore, the speech recognition system 141 may perform voice output synchronization between the plural speech recognition devices and perform control to simultaneously output voices through the synchronized speech recognition devices.

Further/alternatively, the speech recognition system 141 may perform control to output voices from different speech recognition devices for talkers, respectively. In this case, the speech recognition device that recognizes the talker's voice may be different from the speech recognition device that outputs the above voice. For instance, even if the talker's voice is recognized through the voice input unit in a first speech recognition device, the recognized speech may be output through the voice output unit in a second speech recognition device (e.g., either of left and right speakers in case of a stereo type speaker, a speaker at any one position in case of a surround type speaker).

As such, when the voices of the talkers are output at different locations, respectively, the listener can easily distinguish the talkers. The location at which the talker's voice is output may be manually or automatically designated by the speech recognition system 141. In the case of automatic designation, the speech recognition system 141 may designate an arbitrary location in which directions of the talkers can be distinguished, or may designate the location identical or similar to a location of the actual talker.

Hereinafter, a description will be given of methods for talker discrimination and channel separation.

In speech recognition for preparation of meeting/conversation records, discrimination of the talkers is important. That is, in the case of meeting/conversation records written for the purpose of recording, remarks of the talkers should be prepared separately for each talker. In addition, since recognition accuracy of the speech recognition device/system is deteriorated when conversations overlap due to simultaneous utterances of multiple talkers located in the same space, voice input channels need to be separated for each talker. Accordingly, in order to solve the above problems, a method for separation of talkers and channels will be proposed later.
1. Methods for separation of talkers and channels: in case of using a separate voice input unit (for example, a headset or a microphone) for each talker, the voice of each talker may be input through an independent channel. When several talkers are located in the same space, voices of other talkers may also be input. However, since there is a difference in voice volume between the original channel and a noise channel, the speech recognition device/system may distinguish voices input from other talkers.
2. Talker separation method: Just as a person can recognize a talker's position with both ears, the speech recognition device/system uses environmental characteristics identified by i-vector and a difference in features of input voices through two or more voice input units, so as to identify location characteristics of the talker. As a result, the talker can be discriminated.
3. Channel separation method: Even if multiple talkers use separate speech inputs, it is difficult for the speech recognition device/system to accurately separate the conversations by the talkers in a section where the conversations overlap due to simultaneous utterances.
   In order to solve this problem, the speech recognition device/system may perform the following functions.
   - First, recognition of the voices input through the plural voice input units, respectively, and selection/use of one with high confidence among the recognized results.
   - Second, recognition of overlapped conversations through a voice input unit, which was mainly used by the subject talker both before and after overlapping the conversations.
   - Third, just as a method in which an image including a background and an object taken together is compared with another image including only the background, followed by subtraction of the same or similar portions to retain only the object according to image processing technology, the same operation may also be applied to a voice so that two different input voices having highest difference in numeral features thereof are subjected to subtraction, thereby removing shuffle noise.
4. Manual talker separation method: The user may be notified by outputting a message on the display unit indicating that talker separation has failed. Then, the user may designate a talker boundary from a sentence, in which talker separation has failed, by operation of a mouse, a keyboard, user's touch, etc., and then directly separate the talker.

Hereinafter, a talker naming method will be described.

In a conversation system or a conversation record, the talkers should be distinguished. Therefore, a name must be assigned to identify each talker. In an automated system, the talker may be identified/discriminated in a login process and using an ID. However, if the login process or the ID is entirely or partially omitted or if a single ID is shared by many, an alternative processing method is required. Hereinafter, such alternative processing method will be proposed.

Method 1: A speech recognition device/system may assign a default name for each input channel or media (for example, microphone 1, microphone 2, or chairman, judge, moderator, announcer 1, etc.).

Method 2: The speech recognition device/system may separate the talkers through self-introduction or connection of titles and substitutes. Specific embodiments for scenarios are as follows:
1) Scenario 1
   User 1: "It's Hwang Myung Jin as a responsible person."
   'User1 = Hwang Myung Jin, a responsible person' Assignment/Naming
2) Scenario 2
   User 1: "Hwang, what do you think about as a responsible person?"
   User 2: "Well."
   User 2 = Hwang, a responsible person, Assignment/Naming
3) Scenario 3
   User 1: "Hwang, please speak as a responsible person."
   User 2: "Well."
   User 2 = Hwang, a responsible person, Assignment/Naming
   User list search
   User 2 = Hwang, a responsible person= Hwang Myung Jin, a responsible person

Hereinafter, an efficient conversation search method will be described.

In general, when searching for a desired part in an image or a recorded file, an approximate location should be searched using a slide bar or the like. This consumes great efforts and time and has a disadvantage of very low search accuracy. However, in a conversation system which is linked with speech recognition such as in the present invention, the desired part maybe searched accurately and quickly through typical text search for the speech recognition result.

In this case, when the user selects a desired text from the recorded conversation contents, the text corresponding to the speech recognition device/system may be output as a voice. To this end, the speech recognition device/system may store the output voice in association with each text part at the time of outputting the text part as voice, and output the corresponding voice at user's request.

If voice output is requested from a user during conversation, the speech recognition device/system may automatically stop the speech recognition function. This is performed to reduce load for recognizing the already recognized content and user separation and discrimination. Depending on setting or if necessary, the speech recognition device/system may continue the speech recognition function without interruption. Alternatively, the speech recognition device/system may continue voice recording even if speech recognition stops during voice play. During voice play, the speech recognition device/system may display the icon/message indicating that the voice is currently playing in real time, as well as a link to the voice under playing back or a text of the voice recognized in the past.

Hereinafter, a method for selecting keywords will be proposed.

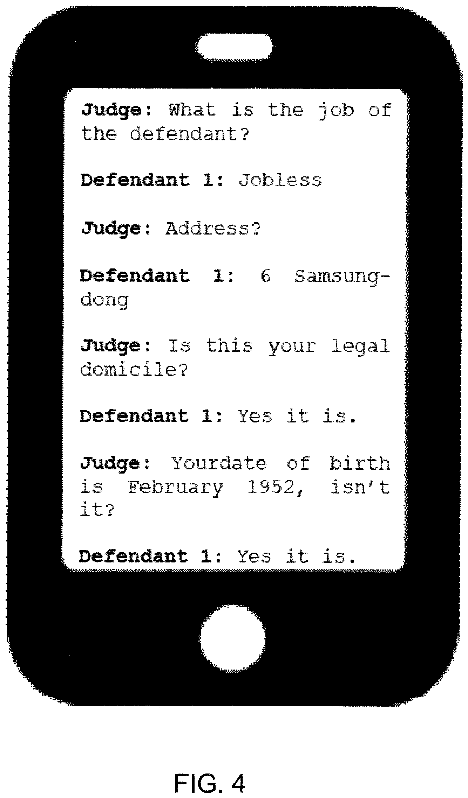

FIG. 4 illustrates a keyword selection method according to an embodiment of the present invention.

The speech recognition device/system may implement automatic/manual real-time/non-real-time keyword selection (highlighting) and use the same to perform automatic/semi-automatic/manual summarization of conversations. That is, the speech recognition device/system may provide a user with a function of automatically/manually displaying key vocabulary or sentences on the display unit (by color or thickness, underlining, changing font, etc.) in real time during conversation. The automatic keyword selection method may include the following.
- First, selection of key vocabularies and key sentences by matching the same with pre-specified keywords.
- Second, selection of importance of vocabularies and sentences through a specific algorithm (for example, an algorithm for determining the vocabulary and sentence having a high frequency of appearance).

As a manual selection method, a method of directly selecting and releasing keywords/key sentences by a user through various input means (for example, a keyboard, a mouse, and a user's touch) during or after conversation may be proposed.

The speech recognition device/system may use different display methods in consideration of the importance or role/function of keywords. For example, the speech recognition device/system may display keywords/key sentences and non-keywords/non-key sentences, and adopted and unadopted proposals in different ways (e.g., different text formats).

The speech recognition device/system may automatically/manually summarize the conversation/meeting record based on the keywords/key sentences. When performing automatic summarization, the speech recognition device/system may summarize the conversation/meeting record through a specific algorithm based on the keywords/key sentences. When performing manual summarization, the speech recognition device/system may summarize the conversation/meeting record by listing the vocabularies/sentences directly selected by the user according to predefined forms and rules.

FIG. 4 illustrates a method of correcting misrecognition according to an embodiment of the present invention.

The speech recognition device/system may display vocabulary or a sentence having low recognition confidence differently from other vocabularies/sentences (for example, in a different text format). For example, the speech recognition device/system may display vocabulary or a sentence, which was determined to have low recognition confidence, with different color or font or underline, or may add a separate icon thereto. In this case, the speech recognition device/system may determine the confidence using a specific language model and/or acoustic model. When both models are used, the speech recognition device/system may display the confidence based on the language model and the confidence based on the acoustic model to be distinguished from each other. Alternatively, the user may directly correct a portion in which voice recognition is judged to be incorrect, in real time.

The speech recognition device/system may reflect the modified content in real time. In order for the speech recognition device/system to reflect the correction of misrecognition in real time, the following methods may be proposed.
- First, rebuilding of the basic language model by reflecting the correction of misrecognition in the same.
- Second, building of a volatile language model that is used only in the corresponding conversation and then disappears by reflecting the correction of misrecognition, other than the basic language model.
- Third, a post-processing method that simply repeats the same correction of the same vocabulary.

For the post-processing method, the speech recognition device/system may simply compare the vocabulary and replace the same with new corrected content. Alternatively, a method of reflecting the correction of misrecognition in consideration of similarity in voice features at the time of pronunciation may be proposed.

In this case, the real-time reflection of the corrected content of the misrecognition may be performed for only a subsequent conversation, or may include the previous conversation too. In addition, the content corrected by the user may be recorded and displayed separately and, even if speech recognition is newly performed, the corresponding record or display may not be deleted. In addition, the speech recognition device/system may display/provide the user's pre-correction error content and the post-correction content together.

Hereinafter, a method of configuring a chat window will be proposed.

In addition to the text including the conversation content, the chat window may also be configured with an image, a video, share viewing web page (Viewshare), share drawing (Drawshare), or a view image of the other party in the same window.

The speech recognition device/system may play back the contents of the conversation by voice during or after conversation, and may play back in chronological order or reverse order. The user may select a play time point by scrolling the conversation contents or using a slide bar. In this case, all of texts/images output on the display unit may be output in synchronization with the conversation contents under playing back. Further, the user may change the configuration of the chat window except for modification of the contents.

Hereinafter, a method of separating and displaying the conversation of each talker will be proposed.

The speech recognition device/system may sort sentences in chronological order after a process of separating/discriminating the sentences for respective talkers. Alternatively, the speech recognition device/system may not separate sentences when simultaneous utterance occurs for at least a predetermined time or when the talkers are divided at a point where the sentences should not be separated. However, in such case, one sentence may be assigned for each talker but the sentences of each talker may be displayed in a bundle. The sentences managed in a bundle may exhibit synchrony between the uttered sentences and the time of utterance by adjusting indentation or spacing for words or letters based on the time of simultaneous utterance.

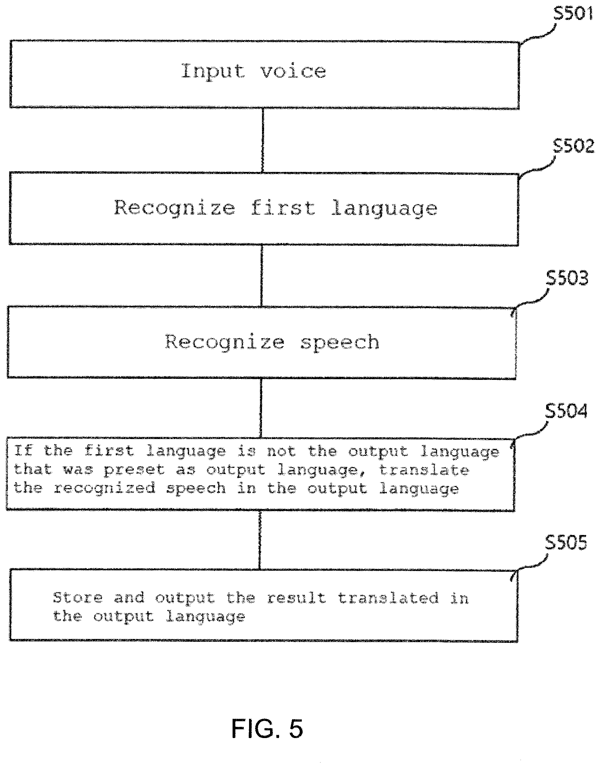

FIG. 5 is a flowchart illustrating the speech recognition and translation method according to an embodiment of the present invention. With respect to the flowchart, the above-described embodiments/descriptions may be applied in the same or similar manners, and redundant description will be omitted.

First, the speech recognition device/system may input a voice (S501). The inputting of a voice may correspond to a step of distinguishing a talker for each voice input unit to input the voice and inputting the voice of each talker through an independent channel.

Next, the speech recognition device/system may recognize a first language that is a language of the voice(S502).

Then, the speech recognition device/system may recognize a text of the voice through a basic acoustic model based on the first language (S503). Here, recognizing the text of the voice may mean converting the voice into text in the first language through the basic acoustic model.

Next, when the first language is not an output language preset as the output language, the speech recognition device/system may translate the recognized speech into the output language (S504). In this case, the speech recognition device/system may translate and convert the text in the first language into the text in the output language.

Then, the speech recognition device/system may store and output a result configured in the output language (S505). In this case, the speech recognition device/system may output the result configured in the output language as text and/or sound. When outputting as sound, the speech recognition device/system may output the output language in the same voice as the input voice. To this end, the speech recognition device/system may store the input voice in a memory in advance.

If there is a plurality of voice output units for outputting the output language as the sound in the same area, the speech recognition device/system may select at least one voice output unit to output a sound among the plural speech output units, and then, may output a result configured in the output language as the sound through the selected at least one voice output unit. In this case, the speech recognition device/system may select the voice output unit in a predetermined number in nearest order to the actual or virtual position of the talker among the plural voice output units.

Further, when a voice is input several times, the speech recognition device/system may distinguish output texts by identifiers (ID) in order to identify an input source of the voice and then output the result in chronological order in which the voice is input. The identifiers may be differently allocated to the respective voice input channels in which the voice is input. Further, the identifier may be selected within the result configured in the output language. In addition, the speech recognition device/system may store the identifier and the result configured in the output language in association with each other.

Further, the speech recognition device/system may output a text to which different formats are applied according to the importance of words, vocabularies and/or sentences in the result configured in the output language. In this case, the importance may be determined based on appearance frequency in the currently translated and stored result.

Further, the speech recognition device/system may output a text to which a preset format is applied in regard to words, vocabularies and/or sentences, speech recognition confidence of which is less than a predetermined level among the results configured in the output language. In this case, the speech recognition device/system may input a corrected text of the text to which the preset format is applied, and then may replace the text to which the preset format is applied with the corrected text.

Further, when the speech recognition device/system outputs the pre-stored result as a voice (S505), the inputting of the voice (S501) may be stopped while outputting the pre-stored result.

Further, the speech recognition device/system may be input with selection or release of keywords and/or key sentences among the output result by a user (for example, manual input through a keyboard, a mouse, a user's touch, etc.). In this case, the speech recognition device/system may summarize the result configured in the output language through a preset algorithm based on the selected keywords and/or key sentences.

Embodiments of the present invention may be implemented by various means, for example, hardware, firmware, software or a combination thereof. In the case of a hardware implementation, one embodiment of the present invention may be implemented by one or more of application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and the like.

In the case of implementation by firmware or software, one embodiment of the present invention may be implemented in the form of a module, procedure, mathematical function, etc. that performs the functions or operations described above. The software code may be stored in a memory and driven by the processor. The memory may be located inside or outside the processor, and may exchange data with the processor by various known means.

It will be apparent to those skilled in the art that the present invention may be embodied in other specific forms without departing from the essential features of the present invention. Accordingly, the above detailed description should not be construed as being limited in all aspects but considered as illustrative. The scope of the present invention should be determined by reasonable interpretation of the appended claims, and all changes within the equivalent scope of the present invention are included in the scope of the present invention.

In the present specification, 'and/or' may be interpreted to mean 'at least one'.

### Industrial Applicability

The present invention is applicable to diverse conversation situations.

## Claims

1. A speech recognition/translation method, comprising:
inputting a voice; recognizing a first language that is a language of the voice; recognizing a text of the voice through a basic acoustic model based on the first language;
if the first language is not an output language preset as the output language, translating the recognized speech into the output language; and storing and outputting a result configured in the output language.

2. The method according to claim 1, wherein the speech recognition is a step of converting the voice into a text in the first language through the basic acoustic model.

3. The method according to claim 2, wherein the translation into the output language is a step of translating the text in the first language and converting the same into a text in the output language.

4. The method according to claim 1 or 3, wherein the storage and output of the result configured in the output language includes outputting the result translated in the output language as text and/or sound.

5. The method according to claim 4, wherein the outputting of the result configured in the output language as the sound includes outputting the output language in the same voice as the input voice.

6. The method according to claim 4, wherein, if a plurality of voice output units to output the output language as the sound is present in the same area, the outputting of the result configured in the output language as the sound includes:
selecting at least one voice output unit to output the above sound among the plural voice output units; and
outputting the result as the above sound only through the selected at least one voice output unit.

7. The method according to claim 6, wherein the selection of the at least one voice output unit is a step of selecting the voice output units in a predetermined number in nearest order to the actual or virtual position of a talker among the plural voice output units.

8. The method according to claim 4, wherein, if the voice is input multiple times, the outputting of the result configured in the output language as the text is a step of discriminating the text by identifiers (ID) in order to identify an input source of the voice and then outputting the result in chronological order in which the voice is input.

9. The method according to claim 8, wherein the identifiers are differently allocated to the respective voice input channels in which the voice is input.

10. The method according to claim 9, wherein the identifier is selected within the result configured in the output language.

11. The method according to claim 8, wherein the outputting of the result configured in the output language as the text includes outputting a text to which different formats are applied according to the importance of words, vocabularies and/or sentences among the result configured in the output language.

12. The method according to claim 11, wherein the outputting of the result configured in the output language as the text further includes outputting a text to which a preset format is applied in regard to words, vocabularies and/or sentences of which speech recognition confidence is less than a predetermined level among the results configured in the output language.

13. The method according to claim 12, further comprising:
inputting a corrected text of the text to which the preset format is applied; and replacing the text to which the preset format is applied with the corrected text.

14. The method according to claim 13, wherein the storage of the result configured in the output language further includes storing the identifier and the result configured in the output language in association with each other.

15. The method according to claim 1, wherein the inputting of the voice corresponds to discriminating the talkers by the voice input units in which the voice is input, and then inputting the voice of each talker through an independent channel.

16. The method according to claim 1, wherein, if the pre-stored result is output as the voice, input of the voice is stopped while outputting the pre-stored result.

17. The method according to claim 1, further comprising inputting selection and release of keywords and/or key sentences among the output result by a user.

18. The method according to claim 17, further comprising summarizing the result configured in the output language through a preset algorithm based on the selected keywords and/or key sentences.

19. A speech recognition system, comprising:
a voice input unit to input a voice; a processor that recognizes a first language as a language of the voice, recognizes the voice through a basic acoustic model based on the first language and, if the first language is not an output language preset as the output language, translates the recognized speech into the output language; a memory to store a result translated in the output language; and an output unit to output the translated result in the output language.
